# EUROPÄISCHE PATENTSCHRIFT

(11) **EP 1 447 589 B1**
(45) Veröffentlichungstag und Bekanntmachung des Hinweises auf die Patenterteilung: **02.09.2009**
(21) Anmeldenummer: 04003290.6
(22) Anmeldetag: 13.02.2004
(51) Int. Cl.: F16F 9/32, F16F 9/18

(54) **Dämpfer**
Damper
Amortisseur

(30) Priorität: 17.02.2003 DE 10306564
(43) Veröffentlichungstag der Anmeldung: 18.08.2004
(73) Patentinhaber: Liebherr-Aerospace Lindenberg GmbH, 88161 Lindenberg/Allgäu (DE)
(72) Erfinder: Gaile, Anton, 88299 Leutkirch (DE)
(74) Vertreter: Laufhütte, Dieter

(56) Entgegenhaltungen:
- DE-C- 969 377
- DE-U1- 29 518 973
- US-A- 3 020 981
- US-A- 5 682 980
- US-A- 5 738 191

## Beschreibung

Die Erfindung betrifft einen Dämpfer mit einem Hydraulikzylinder nach dem Oberbegriff des Anspruchs 1.

Durch die immer weiter erhöhten Geschwindigkeits- und Komfortanforderungen bei modernen Schienenfahrzeugen werden auch immer höhere Anforderungen an die bei diesen Fahrzeugen verwendeten Dämpfer gestellt. Insbesondere besteht bei Dreh-, Koppel-, oder Schlingerdämpfern die Forderung, dass diese bereits bei kleinen Hüben eine möglichst große Dämpfungskraft zur Verfügung stellen sollen, um die im Fahrzeug entstehenden Schwingungen bereits im Ansatz zu bedämpfen. Je höher die Dämpfungskraft bei kleinen Hüben ausfällt, desto niedriger kann das zur Stabilisierung des Fahrzeuges notwendige Kraftniveau gewählt werden, was im Umkehrschluß wieder eine Reduktion des Fahrzeugverschleißes und eine Erhöhung des Fahrkomforts zur Folge hat. Des weiteren besteht die Forderung, dass die Steifigkeit des Dämpfers in Zug- und Druckrichtung möglichst symmetrisch sein soll, um die dynamisch wirkenden Dämpferkräfte möglichst klein zu halten und eine symmetrische Dämpfungswirkung zu erreichen. Maßgeblich für die Dämpfungskraft eines Dämpfers bei kleinen Hüben ist dessen Steifigkeit. Diese setzt sich zusammen aus der Steifigkeit der verwendeten Befestigungselemente (z. B. Sphärolager) und der hydraulischen Steifigkeit des Dämpfers. Speziell bei Dämpfern mit großem Hub stellt hierbei die hydraulische Steifigkeit die dominierende Größe dar, da diese mit zunehmendem Dämpferhub linear abnimmt. Es besteht zwar die theoretische Möglichkeit, diesem Effekt durch Vergrößerung des Kolbendurchmessers entgegenzuwirken, dieses hat jedoch eine Vergrößerung des Dämpferdurchmessers zur Folge was wiederum aus Bauraum- und Kostengründen oftmals nicht möglich ist.

Um eine hohe Betriebssicherheit zu gewährleisten müssen moderne Dämpfer auch die Fähigkeit zur Selbstentlüftung besitzen.

Für hydraulische Dämpfer in Schienenfahrzeugen sind bisher im wesentlichen zwei Dämpferbauprinzipien verwendet worden.

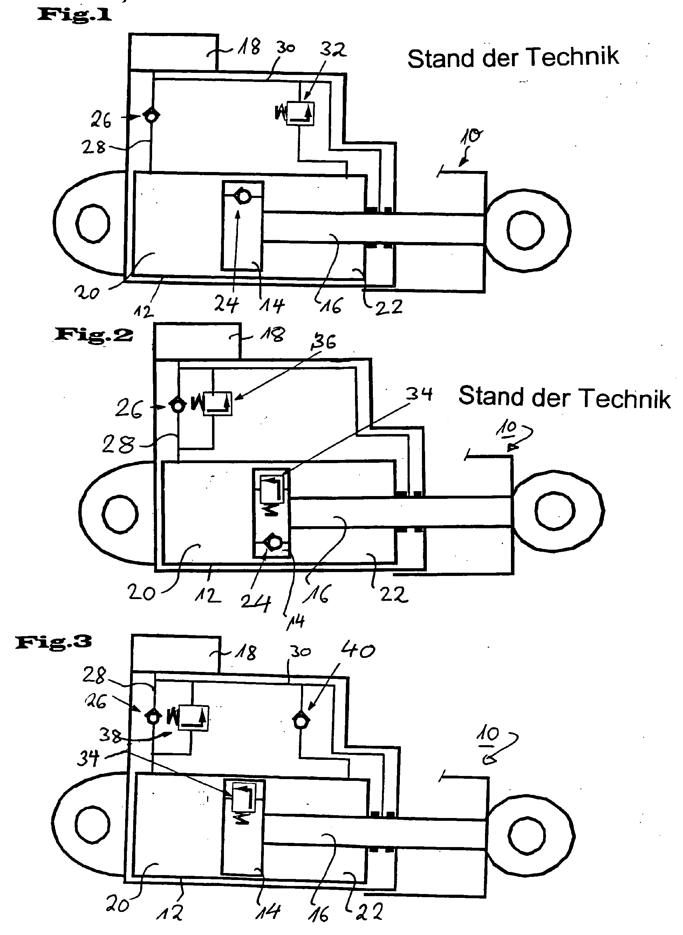

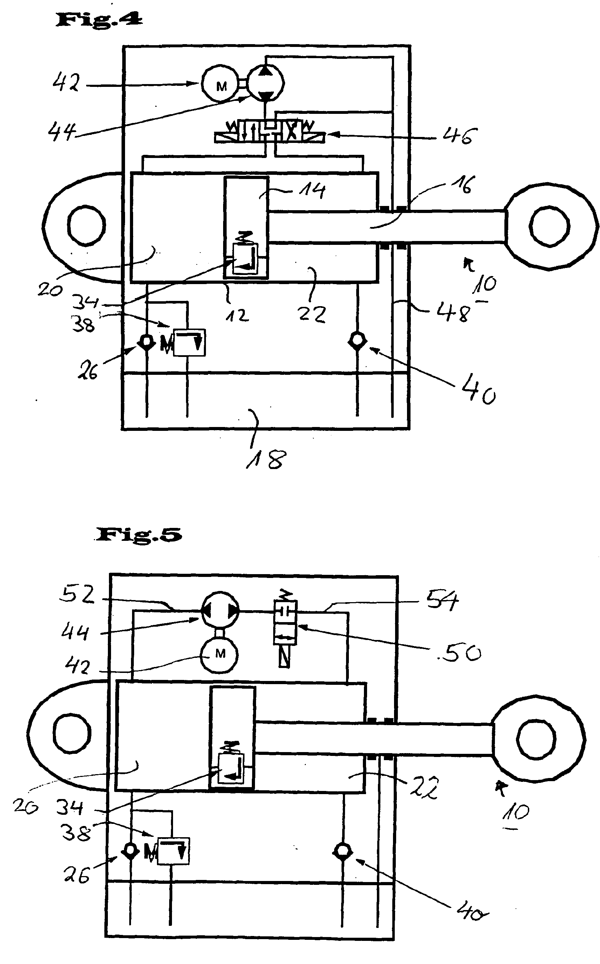

In Fig. 1 ist das erste Prinzip, die sogenannte Koni-Bauart, schematisch dargestellt. Dieser Dämpfer arbeitet nach dem Umströmprinzip. Der dort dargestellte Dämpfer 10 weist einen Hydraulikzylinder 12, einen Kolben 14, eine Kolbenstange 16 und einen Hydraulikölspeicher 18 auf. Durch den Kolben 14 wird der Hydraulikzylinder 12 in einen Kolbenraum 20 und einen Ringraum 22 unterteilt. Innerhalb des Kolbens 14 ist ein Rückschlagventil 24 integriert und im Boden des Kolbenraums ist ein bodenseitiges Rückschlagventil 26 in der Leitung 28, die den Kolbenraum 20 mit dem Hydraulikölspeicher 18 verbindet, angeordnet. Der Hydraulikölspeicher 18 steht über eine Leitung 30 mit dem Ringraum 22 in Verbindung. In der Verbindungsleitung 30 ist ein Dämpfungsventil 32 integriert. Diese Dämpferbauart weist eine sehr gute Selbstentlüftung auf und gewährt bei gleichförmiger Bewegung symmetrische Kräfte in Zug- und Druckrichtung. Hierzu ist es jedoch notwendig, dass das Verhältnis Kolbenfläche zur Kolbenstangenfläche 2:1 gewählt wird. Des weiteren besitzt dieses Bauprinzip den Vorteil dass ein und dasselbe Dämpfungsventil für die Zug- und Druckrichtung benutzt werden kann. Nachteilig bei diesem Bauprinzip ist die unterschiedliche Steifigkeit der Hydraulikölsäule in Zug- und Druckrichtung (nämlich 1:3 in Mittelstellung), wodurch sich bei kleinen Hüben (dynamische Anregung) stark unterschiedliche Kräfte ergeben können. Des weiteren ist die Steifigkeit in Druckrichtung sehr gering, wodurch sich, speziell bei langen Dämpfern, eine unerwünschte Federwirkung des Dämpfers ergibt.

In Fig. 2 ist ein weiteres Dämpferprinzip nach dem Stand der Technik, nämlich das sogenannte Zweirohr-Prinzip, dargestellt. Gleiche Teile sind hier mit gleichen Ziffern belegt. Bei dieser Bauform steht der Hydraulikölspeicher 18 nicht mehr mit dem Ringraum 16 in Verbindung. Im Boden des Hydraulikzylinders ist zusätzlich zu dem Rückschlagventil 26 ein Dämpfungsventil 36 angeordnet. Im Kolben 14 ist neben dem Rückschlagventil 24 noch ein Dämpfungsventil 34 angeordnet. Dieses Bauprinzip wird im wesentlichen bei kleineren Dämpfern eingesetzt. Im Gegensatz zum Durchströmprinzip weist diese Bauart eine schlechtere Selbstentlüftung auf, da das Öl nicht ständig im Kreislauf umgepumpt wird. Auch bei diesem Bauprinzip wirkt (in der Basisversion) in Druckrichtung nur die Kolbenstangenfläche, wodurch die hydraulische Steifigkeit auch bei dieser Bauart eine Unsymmetrie von 1:3 (Druck: Zug) aufweist.

Es sind auch Bauformen nach diesem Bauprinzip bekannt, welche in Druckrichtung bei geringeren Kräften die komplette Kolbenfläche als Wirkfläche nutzen, wodurch eine bessere Symmetrie der hydraulischen Steifigkeit erreicht werden kann. Hierbei wird das Rückschlagventil im Kolben des Dämpfers durch ein Ventil ersetzt, welches einen zusätzlichen Druckabfall erzeugt. Durch die zwei Dämpfungsventile, die gleichzeitig in Druckrichtung wirken, während in Zugrichtung nur ein Dämpfungsventil wirkt, ergibt sich jedoch das Problem, dass sich in bestimmten Betriebspunkten wiederum stark unsymmetrische Dämpfungskräfte ergeben.

Bereits aus der DE 22 57 556 C2 ist ein Dämpfer mit einem Hydraulikzylinder bekannt, der durch einen Kolben mit Kolbenstange in einen Kolbenraum und einen Ringraum unterteilt ist, wobei Kolbenraum und Ringraum mit einem Ölspeicher verbunden sind und wobei im Boden des Hydraulikzylinders dem Zwei-Rohr-Prinzip entsprechend ein federbelastetes Dämpfungsventil und ein Rückschlagventil, sowie im Kolben ein Dämpfungsventil angeordnet sind, wobei ein kolbenstangenseitiges Rückschlagventil in der Verbindungsleitung zwischen dem Hydraulikölspeicher und dem Ringraum angeordnet ist. Einen ähnlichen Dämpfer zeigt bereits auch die DE 80 34 655 U1 und die DE 43 27 915 C2.

Aufgabe der Erfindung ist es, einen gattungsgemäßen Dämpfer, insbesondere für den Einsatz in Schienenfahrzeugen, derart weiterzubilden, dass die hydraulische Steifigkeit des Dämpfers bei gegebenen Bauraum merklich erhöht wird.

Erfindungsgemäß wird diese Aufgabe durch die Merkmale des Anspruchs 1 gelöst. Demnach weist ein Dämpfer mit einem Hydraulikzylinder, der durch einen Kolben mit Kolbenstange in einem Kolbenraum und einem Ringraum unterteilt ist, wobei Kolbenraum und Ringraum mit einem Ölspeicher verbunden sind und wobei im Boden des Hydraulikzylinders ein Dämpfungsventil und ein Rückschlagventil und im Kolben ein Dämpfungsventil angeordnet sind, so dass in Zug- und Druckrichtung ein gleichgerichteter Ölstrom erzeugt wird, ein kolbenstangenseitiges Rückschlagventil in der Verbindungsleitung zwischen dem Hydraulikölspeicher und dem Ringraum auf, das den Ölstrom vom Ringraum in Richtung Hydraulikölspeicher sperrt.

Hierdurch ist ein technisches Prinzip geschaffen, welches die hydraulische Steifigkeit eines Dämpfers bei gegebenem Bauraum um den Faktor 2 bis 3 erhöht, wodurch sich die Dämpfungskraft des Dämpfers bei kleinen Hüben entsprechend erhöht. Des weiteren weist diese Bauart eine ausgezeichnete Selbstentlüftung auf, wodurch sichergestellt ist, dass die Funktion des Dämpfers unter allen Betriebsbedingungen gewährleistet ist.

Weiterhin bietet dieses Dämpferkonzept die Möglichkeit, die Dämpfungskraft auf einfache Art hubabhängig zu variieren.

Vorteilhafte Ausgestaltungen der Erfindung ergeben sich aus den sich an den Hauptanspruch anschließenden Unteransprüchen.

Aufgrund des neuen Dämpferkonzepts besteht die Möglichkeit, die Dämpfungskraft auf einfache Art hubabhängig zu variieren. Hierzu muss lediglich ein hubabhängiger Bypass zur Kolbenabdichtung erzeugt werden. Eine Möglichkeit der technischen Umsetzung besteht darin, in der Zylinderlaufbahn in den Bereich, in dem eine verminderte oder keine Dämpfung gewünscht ist, Einkerbungen anzubringen, welche es dem Hydrauliköl ermöglichen, den Dämpfungskolben zu umströmen. Hierdurch kann die Dämpfungskraft in Zugrichtung quasi auf Null reduziert werden, in Druckrichtung reduziert sich die Kraft um das Verhältnis Kolbenfläche : Stangenfläche. Hierzu ist zu berücksichtigen, dass bei dieser Bauart kein bestimmtes Verhältnis Stangenfläche zu Kolbenfläche gefordert ist, was bedeutet, dass die Kolbenstange lediglich nach ihrer mechanischen Beanspruchung dimensioniert wird. Dieses wiederum führt dazu, dass bei entsprechend klein gewähltem Kolbenstangendurchmesser auch in Druckrichtung sehr geringe Dämpferkräfte erzielt werden können.

## Patentansprüche

1. Dämpfer (10) mit einem Hydraulikzylinder (12), der durch einen Kolben (14) mit Kolbenstange (16) in einen Kolbenraum (20) und einen Ringraum (22) unterteilt ist, wobei Kolbenraum (20) und Ringraum (22) mit einem Ölspeicher (18) verbunden sind, wobei im Boden des Hydraulikzylinders (12) ein Dämpfungsventil (38) und ein Rückschlagventil (26) und im Kolben (14) ein Dämpfungsventil (34) angeordnet sind, und wobei ein kolbenstangenseitiges Rückschlagventil (40) in der Verbindungsleitung (30) zwischen dem Hydraulikölspeicher (18) und dem Ringraum (22) angeordnet ist, das den Ölstrom vom Ringraum (22) in Richtung Hydraulikölspeicher (18) sperrt,
**dadurch gekennzeichnet,**
**dass** das im Kolben (14) angeordnete Dämpfungsventil (34) derart ausgebildet ist, dass in Zug- und Druckrichtung ein gleichgerichteter Ölstrom erzeugt wird.

2. Dämpfer nach Anspruch 1, **dadurch gekennzeichnet, daß** zur hubwegabhängigen Umgehung der Kolbendichtung im Kolben (14) oder der Kolbenstange (16) ein Steuerventil (34) angeordnet ist, das in Abhängigkeit vom Hub einen Bypass gewünschter Größe zur Kolbendichtung erzeugt.

3. Dämpfer nach Anspruch 1, **dadurch gekennzeichnet, daß** zur hubwegabhängigen Umgehung der Kolbendichtung Kerben in der Hydraulikzylinderwandung vorgesehen sind, wobei die Größe der Kerben hubabhängig variiert.

4. Dämpfer nach Anspruch 1 oder 2, **dadurch gekennzeichnet, daß** zusätzlich eine Pumpe (44) vorgesehen ist, über die der Dämpfer als Aktuator betreibbar ist.

5. Dämpfer nach Anspruch 4, **dadurch gekennzeichnet, daß** die Pumpe (44) in einem offenen Hydraulikkreislauf das Hydrauliköl direkt aus dem Hydraulikölspeicher saugt, und daß über ein 4/3 Wegeventil (46) die Umschaltung von Dämpfungs- in den Aktuatorbetrieb erfolgen kann sowie die Bewegungsrichtung im Aktuatorbetrieb steuerbar ist.

6. Dämpfer nach Anspruch 4, **dadurch gekennzeichnet, daß** die Pumpe (44) in einem geschlossenen Kreislauf das Hydrauliköl aus dem Hydraulikzylinderraum saugt, daß die Bewegungsrichtung durch die Pumpendrehrichtung einstellbar ist und daß die Umschaltung vom Dämpfungs- in den Aktuatorbetrieb über ein 2/2 Wegeventil (50) erfolgen kann.

## Claims

1. A damper (10) comprising a hydraulic cylinder (12) which is divided by a piston (14) having a piston rod (16) into a piston space (20) and a ring space (22), wherein the piston space (20) and the ring space (22) are in communication with an oil store (18), wherein a damping valve (38) and a check valve (26) are arranged in the base of the hydraulic cylinder (12) and a damping valve (34) is arranged in the piston (14), and wherein a check valve (40) at the piston rod side is arranged in the communication line (30) between the hydraulic oil store (18) and the ring space (22), said check valve blocking the oil flow from the ring space (229 in the direction of the hydraulic oil store (18),
**characterised in that**
the damping valve (34) arranged in the piston (14) is formed such that an oil flow in the same direction is generated in the direction of tension and in the direction of compression.

2. A damper in accordance with claim 1, **characterised in that** a control valve (34) is arranged in the piston (14) or in the piston rod (16) for the bypassing dependent on the stroke path of the piston seal, said control valve generating a bypass of a desired magnitude towards the piston seal in dependence on the stroke.

3. A damper in accordance with claim 1, **characterised in that** notches are provided in the hydraulic cylinder wall for the bypassing of the piston seal in dependence on the stroke path, with the size of the notches varying in dependence on the stroke.

4. A damper in accordance with either of claims 1 or 2, **characterised in that** a pump (44) is additionally provided via which the damper is operable as an actuator.

5. A damper in accordance with claim 4, **characterised in that** the pump (44) in an open hydraulic circuit sucks the hydraulic oil directly from the hydraulic oil store; and **in that** the switchover from damping operation into actuator operation can take place via a 4/3 way valve (46) and the direction of movement is controllable in actuator operation.

6. A damper in accordance with claim 4, **characterised in that** the pump (44) in a closed circuit sucks the hydraulic oil from the hydraulic cylinder space; **in that** the direction of movement can be set by the direction of rotation of the pump; and **in that** the switchover from damping operation into actuator operation can take place via a 2/2 way valve (50).

## Revendications

1. Amortisseur (10) doté d'un vérin hydraulique (12), qui est divisé par un piston (14) avec tige de piston (16) en une chambre de piston (20) et une chambre périphérique (22), sachant que la chambre de piston (20) et la chambre périphérique (22) sont reliées avec un réservoir d'huile (18), sachant que dans le fond du vérin hydraulique (12) sont disposés un clapet d'amortissement (38) et un clapet antiretour (26) et dans le piston (14) un clapet d'amortissement (34), et sachant qu'un clapet antiretour du côté de la tige de piston (40) est disposé dans le conduit de raccordement (30) entre le réservoir d'huile hydraulique (18) et la chambre périphérique (22), qui bloque le flux d'huile de la chambre périphérique (22) dans la direction du réservoir d'huile hydraulique (18),
**caractérisé**
**en ce que** le clapet d'amortissement (34) disposé dans le piston (14) est constitué de sorte qu'un flux d'huile agissant dans le même sens est généré dans la direction de la traction et de la pression.

2. Amortisseur selon la revendication 1, **caractérisé en ce que**, pour contourner la jupe de piston en fonction de la trajectoire de course, un clapet de distribution (34) est disposé dans le piston (14) ou dans la tige de piston (16), qui génère une dérivation de taille souhaitée vers la jupe de piston en fonction de la course.

3. Amortisseur selon la revendication 1, **caractérisé en ce que,** pour contourner la jupe de piston en fonction de la trajectoire de course, des encoches sont prévues dans la paroi du vérin hydraulique, sachant que la taille des encoches varie en fonction de la course.

4. Amortisseur selon les revendications 1 ou 2, **caractérisé en ce qu'**une pompe (44) est prévue à titre supplémentaire, par l'intermédiaire de laquelle l'amortisseur est exploitable comme actuateur.

5. Amortisseur selon la revendication 4, **caractérisé en ce que** la pompe (44) aspire l'huile hydraulique directement à partir du réservoir d'huile hydraulique dans un circuit hydraulique ouvert, et **en ce que**, par l'intermédiaire d'un distributeur à 4/3 orifices (46), la commutation du mode d'amortissement au mode d'actuateur peut s'effectuer et la direction de mouvement être commandée au mode d'actuateur.

6. Amortisseur selon la revendication 4, **caractérisé en ce que** la pompe (44) aspire l'huile hydraulique à partir du réservoir d'huile hydraulique dans un circuit hydraulique fermé, **en ce que** la direction de mouvement est réglable par le sens de rotation de la pompe et **en ce que** la commutation du mode d'amortissement au mode d'actuateur peut s'effectuer par l'intermédiaire d'un distributeur à 2/2 orifices (50).
